# FASCICULE DE BREVET EUROPEEN

(11) **EP 3 753 844 B1**
(45) Date de publication et mention de la délivrance du brevet: **19.07.2023**
(21) Numéro de dépôt: 20176315.8
(22) Date de dépôt: 25.05.2020
(51) Int. Cl.: B64C 13/04, B64C 27/22, B64C 27/82

(54) **POIGNÉE DE PILOTAGE ET GIRAVION HYBRIDE MUNI D'UN ROTOR DE SUSTENTATION ET D' AU MOINS UN ROTOR PROPULSIF À HÉLICE GÉNÉRANT UNE POUSSÉE**
STEUERKNÜPPEL UND HYBRID-DREHFLÜGELFLUGZEUG, DAS MIT EINEM AUFTRIEBSROTOR UND MINDESTENS EINEM SCHUB ERZEUGENDEN PROPELLERVORTRIEBSROTOR AUSGESTATTET IST
CONTROL HANDLE AND HYBRID ROTORCRAFT PROVIDED WITH A LIFT ROTOR AND AT LEAST ONE PROPULSION ROTOR GENERATING THRUST

(30) Priorité: 20.06.2019 FR 1906677
(43) Date de publication de la demande: 23.12.2020
(73) Titulaire: Airbus Helicopters, 13725 Marignane Cedex (FR)
(72) Inventeur: ABDELLI, Kamel, 13011 MARSEILLE (FR)
(74) Mandataire: GPI Brevets

(56) Documents cités:
- EP-A1- 3 309 061
- WO-A2-2016/043942
- US-A1- 2017 147 106
- US-B2- 9 650 125

## Description

La présente invention concerne une poignée de pilotage et un giravion hybride muni d'un rotor de sustentation et d'au moins un rotor propulsif à hélice générant une poussée.

Un type de giravion est qualifié par commodité « giravion hybride » dans le cadre de l'invention. Un giravion hybride comprend un fuselage portant au moins une voilure tournante munie d'un rotor de sustentation. Le rotor de sustentation participe au moins à la sustentation de l'aéronef voire à son avancement.

Par exemple pour atteindre une grande vitesse d'avancement, le giravion hybride comprend de plus au moins un rotor propulsif à hélice générant une poussée, possiblement de type hélice tractive ou propulsive. Par exemple, le giravion hybride peut être pourvu de deux rotors propulsifs à hélice dits latéraux et agencés transversalement de part et d'autre du fuselage.

Le rotor de sustentation et les rotors propulsifs à hélice sont mis en rotation par une installation motrice. Cette installation motrice comprend au moins un moteur et un système mécanique d'interconnexion entre les éléments tournants. Un tel système mécanique d'interconnexion peut comprendre au moins une boîte de transmission de puissance, au moins un arbre et des organes d'accouplement...

Les limitations d'un moteur et les limitations d'une boîte de transmission de puissance peuvent permettre de définir divers régimes de fonctionnement et notamment:
- le régime de décollage défini par une puissance maximale au décollage PMD et une durée d'utilisation prédéterminée de cette puissance maximale au décollage,
- le régime maximal continu défini par une puissance maximale en continu PMC correspondant par exemple à environ 90% de la puissance maximale au décollage PMD et par une durée d'utilisation de cette puissance maximale en continu généralement illimitée,
- le régime de puissance étendue défini par une puissance étendue sensiblement équivalente voire égale à la puissance maximale au décollage PMD et par une durée prédéterminée et limitée d'utilisation de cette puissance étendue,
- un régime transitoire défini par une puissance maximale en transitoire PMT.

Sur un giravion multimoteur, l'enveloppe de fonctionnement englobe aussi des régimes de surpuissance d'urgence, uniquement utilisés lorsque l'un des moteurs est en panne :
- le premier régime d'urgence, dénommé parfois « OEI 30" », défini par une puissance de super urgence PSU souvent égale environ à 112% à 120% de la puissance maximale au décollage PMD et par une durée d'utilisation de cette puissance de super urgence PSU prédéterminée, la puissance de super urgence étant classiquement utilisable trois fois pendant un vol,
- le deuxième régime d'urgence, dénommé parfois « OEI 2' », ce deuxième régime d'urgence étant défini par une puissance maximale d'urgence PMU égale environ à 105% à 112% de la puissance maximale au décollage PMD et par une durée d'utilisation de cette puissance maximale d'urgence PMU prédéterminée ;
- le troisième régime d'urgence, dénommé parfois « OEI cont », ce troisième régime d'urgence étant défini par une puissance intermédiaire d'urgence PIU sensiblement égale à la puissance maximale au décollage PMD et par une durée d'utilisation illimitée de cette puissance intermédiaire d'urgence PIU pour le reste du vol après la panne du moteur.

Le giravion hybride peut disposer d'un premier moyen de commande et d'un deuxième moyen de commande pour contrôler respectivement collectivement et cycliquement le pas des pales du rotor de sustentation. De plus, le giravion hybride inclut au moins un mécanisme de commande de la poussée apte à modifier collectivement et d'une même quantité le pas des pales des rotors propulsifs. En présence de deux rotors propulsifs à hélice, des fonctions anticouple et de contrôle de direction peuvent être réalisées par l'utilisation d'une commande de lacet modifiant différemment les poussées exercées par les rotors propulsifs, par exemple via la mise en oeuvre d'un palonnier par le pilote.

Eventuellement, le mécanisme de commande de poussée peut être intégré au sein d'une architecture de commandes de vol électriques. Le mécanisme de commande de poussée est par exemple muni d'une interface de commande de poussée manoeuvrable par un pilote et d'au moins un capteur de mouvement relié électriquement à au moins un calculateur. Par exemple, au moins deux capteurs dissimilaires sont utilisés par sécurité. L'agencement d'une interface de commande de poussée et des capteurs associés dans un logement confiné peut être délicat. Par exemple, un levier de pas collectif commandant le pas collectif des pales du rotor de sustentation comporte usuellement un manche portant un boîtier, ce boîtier étant muni d'une face avant sur laquelle sont disposés de multiples boutons. Ajouter une interface de commande de poussée et les capteurs associés dans le boîtier qui présente de fait un environnement déjà encombré n'est pas simple.

Dans ce contexte, le document WO 2016/043942 décrit un mécanisme de commande qui est muni d'un bouton rotatif. Ce bouton rotatif est solidaire en rotation d'un arbre d'un moteur. Un encodeur détermine alors la position angulaire de l'arbre.

Le document WO 2016/043943 décrit un mécanisme de commande qui est muni d'un bouton mobile entre une position neutre et une pluralité de positions non neutres. Une première position non neutre induit le déplacement des pales d'une hélice selon une première direction, une deuxième position non neutre induit le déplacement des pales d'une hélice selon une deuxième direction et une troisième position non neutre provoque le déplacement des pales d'une hélice dans des positions induisant une poussée nulle générée par l'hélice.

Le document FR3057243 (équivalent à EP3309061 ou US2018099739) décrit un dispositif de commande électrique muni d'un moyen de manoeuvre. De plus, le dispositif de commande électrique comprend un premier système de mesure et un deuxième système de mesure qui réalisent respectivement une première mesure et une deuxième mesure de la position courante du moyen de manoeuvre. Une unité de traitement compare la première mesure et la deuxième mesure pour générer un signal de commande en fonction de ladite position courante, ladite unité de traitement considérant que le moyen de manoeuvre est dans une position neutre lorsque la première mesure et la deuxième mesure ne correspondent pas à une même position du moyen de manoeuvre. Sur détection d'un écart, la commande est considérée défectueuse et donc non prise en compte et inhibée.

Le document US4488851 décrit un système de gestion de puissance.

Le document FR3041783 décrit une interface de commande à retour haptique comportant un module à fluide magnétorhéologique. De plus, une jauge de contrainte est configurée pour détecter la déformation d'un composant suite à un effort exercé sur un élément mobile.

Par ailleurs, un giravion classique de type hélicoptère comporte un instrument de première limitation pour évaluer le fonctionnement de son installation motrice au regard de limites. Un tel instrument de première limitation ne parait pas adapté à un giravion hybride possédant non seulement un rotor de sustentation mais aussi au moins un rotor propulsif à hélice.

Le document FR 2946322 décrit un procédé d'aide au pilotage pour un aéronef comprenant un rotor de sustentation et deux rotors propulsifs à hélice. Ce procédé comporte les étapes de détermination d'un pas moyen maximal des pales des rotors propulsifs en fonction d'un gradient de puissance et d'affichage sur un indicateur dédié de ce pas moyen maximal sur une échelle graduée en pas balayée par une aiguille.

Le document US9650125 décrit une interface de commande de pilotage destinée à la commande sélective d'un système de pilotage automatique par le pilote d'un hélicoptère classique. L'interface de commande comprend un boîtier avec une pluralité de boutons s'interfaçant avec des commutateurs correspondants à l'intérieur du boîtier. Ce boîtier en matière plastique et/ou en métal présente une forme de moulage appropriée. Chaque bouton est positionné sur ce boîtier.

Les documents US20190113403 et US2019112071 sont aussi connus. Les documents US2017147106 et WO2016043942 ont également été cités.

La présente invention a alors pour objet de proposer une poignée de pilotage permettant de faciliter le pilotage d'un giravion hybride.

L'invention vise donc une poignée de pilotage manoeuvrable par un pilote, ladite poignée de pilotage comportant un manche portant un boîtier d'extrémité, ledit boîtier d'extrémité comprenant une coque creuse munie d'une face supérieure, ledit boîtier d'extrémité comportant au moins une commande en saillie vers un milieu extérieur de ladite face supérieure, ladite au moins une commande étant mobile par rapport à la coque.

La poignée de pilotage peut être agencée sur un levier, et par exemple un levier de pas collectif contrôlant collectivement le pas de pales d'un rotor de sustentation.

En outre, la poignée de pilotage comporte un organe commandable pouvant être sollicité par un individu pour générer un ordre de commande, ladite coque dudit boîtier d'extrémité comprenant au moins une paroi électronique intégrant un circuit électronique, ledit organe commandable étant porté par la paroi électronique. Le circuit électronique comprend au moins un capteur coopérant avec ledit organe commandable, éventuellement pour générer un signal électrique variable lorsque ledit organe commandable est sollicité par un individu.

L'expression « au moins une commande en saillie vers un milieu extérieur de ladite face supérieure » fait référence à au moins un organe manoeuvrable par un pilote humain, cet organe étant localisé au niveau de la face supérieure, tel qu'un bouton poussoir, un bouton basculant, un bouton en forme de chapeau chinois, un interrupteur à levier...

L'expression « paroi électronique intégrant un circuit électronique » désigne une paroi du boîtier d'extrémité intégrant le circuit électronique, une telle paroi n'étant pas à confondre avec une paroi et un circuit électronique indépendant l'un de l'autre et fixés l'un à l'autre par des moyens usuels de rivetage, vissage, d'emboitement... Le circuit électronique est intégré dans l'épaisseur même de la paroi par une méthode de plastronique, par exemple une méthode connue sous l'acronyme « LDS » et l'expression anglaise correspondante « Laser Direct Structuring », ou encore sous l'expression française « structuration directe au laser ». Ce procédé est utilisé pour générer une piste électriquement conductrice sur un support. Ce support présente un matériau composite ou thermoplastique comprenant un additif, cet additif prenant la forme d'un métal organique. Cet additif est « activé » par le passage d'un laser. Ce laser crée des cratères et des rainures microscopiques dans lesquels du cuivre peut être ancré fermement en plongeant la pièce dans un bain catalyseur.

L'expression « organe commandable » désigne un organe pouvant être sollicité par un individu et par exemple par un index d'une main d'un individu, tel qu'un bouton rotatif, un bouton qui translate, une face tactile... L'organe commandable est distinct des commandes présentes sur la face supérieure. La paroi électronique peut être distincte de la face supérieure. La sollicitation de l'organe commandable est détectée par le capteur, le circuit électronique générant un signal en fonction de cette sollicitation. Le volume interne d'un boîtier d'extrémité, par exemple d'un boîtier agencé sur un levier de pas collectif d'un rotor de sustentation, est de fait encombré en raison des diverses commandes portées par ce boîtier d'extrémité.

L'invention propose d'ajouter un organe commandable apte à commander par exemple une poussée générée par un système propulsif voire apte à réaliser d'autres fonctions, le circuit électronique coopérant avec cet organe commandable étant une partie intégrante d'une paroi du boîtier d'extrémité portant cet organe commandable. Dès lors, cette solution permet d'agencer un tel organe commandable dans un environnement éventuellement encombré, et éventuellement dans une zone usuellement non utilisée. En outre, un tel organe commandable peut posséder une amplitude de commande importante, contrairement à un bouton de type chapeau chinois par exemple. Dès lors, l'organe commandable peut permettre d'obtenir une amplitude de commande importante et ainsi peut permettre de générer des ordres de pilotage précis.

La poignée de pilotage peut aussi tendre à optimiser l'ergonomie de pilotage, un pilote pouvant manoeuvrer l'organe commandable avec l'index de la main tenant la poignée de pilotage.

La poignée de pilotage peut comprendre une ou plusieurs des caractéristiques qui suivent.

Selon une première réalisation l'organe commandable peut comprendre un bouton mobile par rapport au boîtier d'extrémité et agencé au moins partiellement en dehors de ladite coque, ledit au moins un capteur coopérant avec ledit bouton.

Selon une première variante de la première réalisation, le bouton peut prendre la forme d'un curseur déplaçable en translation.

Le bouton peut contenir un appui bouton permettant de fixer un niveau de commande sans avoir à maintenir ce bouton.

Selon une deuxième variante de la première réalisation, le bouton peut prendre la forme d'un bouton rotatif mobile en rotation par rapport au boîtier d'extrémité autour d'un axe de rotation, ledit bouton rotatif ayant une roue agencée en dehors de ladite coque, ledit au moins un capteur coopérant avec ledit bouton rotatif.

Le terme « roue » désigne un organe manoeuvrable par un pilote et mobile en rotation. Une telle roue peut présenter une amplitude de commande importante.

Selon un exemple, le bouton rotatif peut comprendre un arbre fixe solidaire de la paroi électronique de la coque, la roue étant mobile en rotation autour de l'arbre.

Selon un autre exemple, le bouton rotatif peut comprendre un arbre solidaire de la roue en rotation autour de l'axe de rotation, ledit arbre étant porté par la paroi électronique de ladite coque, ledit arbre étant mobile en rotation par rapport à la coque.

L'agencement de la roue s'avère alors relativement simple.

Des paliers et/ou des roulements ou un équivalent peuvent être agencés entre l'arbre et la coque. Au moins un organe de friction et/ou un ressort peuvent aussi être agencés.

Selon un autre aspect, ladite roue peut présenter un diamètre supérieur à une longueur de la coque et le cas échéant d'un flanc de la coque, ladite roue étant en saillie de la coque selon au moins une direction vue selon un sens allant de la roue vers la coque.

Cette caractéristique peut tendre à favoriser la manoeuvre de la roue.

Selon un deuxième mode réalisation, l'organe commandable peut comporter une face tactile.

Cette face tactile peut éventuellement être utilisée afin de remplir diverses fonctions.

Quelle que soit la réalisation, la paroi électronique peut être accolée à la face supérieure.

Par exemple, la coque peut avoir sensiblement une forme de pavé, cette coque pouvant comprendre une ou plusieurs pièces mécaniques. En fonction de la position du pilote par rapport à la poignée de pilotage, le circuit électronique peut être intégré au flanc gauche ou au flanc droit de la coque au regard du pilote, par exemple pour que l'organe commandable soit atteignable par l'index de la main du pilote serrant la poignée de pilotage.

Selon un autre aspect, le circuit électronique peut être relié à au moins une connexion électrique cheminant dans ledit manche.

Une telle connexion électrique peut prendre la forme d'un fil ou encore d'une piste électrique intégrée à une paroi du manche ou à une autre paroi de la coque par une méthode de fabrication plastronique.

Selon un autre aspect, ledit au moins un capteur peut comporter au moins une paire de deux senseurs dissimilaires, générant par exemple chacun un signal variant en fonction d'une rotation de ladite roue éventuelle, lesdits deux senseurs d'une paire étant configurés pour communiquer avec un même calculateur.

L'expression « paire de deux senseurs dissimilaires » signifie que les deux senseurs d'une même paire fonctionnent différemment. Une telle caractéristique peut tendre à obtenir un système robuste aux pannes.

Le calculateur commande par exemple au moins une servocommande d'un système propulsif en fonction des mesures réalisées par les deux senseurs.

Par exemple, les deux senseurs d'une dite paire peuvent comporter un capteur à effet hall et un potentiomètre.

Eventuellement, ledit au moins un capteur peut comporter au moins deux dites paires configurées pour communiquer respectivement avec deux calculateurs.

Par sécurité, deux paires de deux senseurs chacune peuvent être agencées dans le circuit électronique, chaque paire communiquant avec son propre calculateur.

L'invention vise de plus un giravion hybride, le giravion hybride ayant un système propulsif comprenant au moins un rotor propulsif muni d'une pluralité de premières pales ayant un premier pas variable au moins pour participer à l'avancement du giravion hybride, ledit giravion hybride comprenant un rotor de sustentation muni d'une pluralité de deuxièmes pales ayant un deuxième pas variable au moins pour participer à la sustentation du giravion hybride, ledit giravion hybride ayant une installation motrice pourvue d'au moins un moteur fonctionnant selon au moins un régime pour mettre en rotation ledit rotor de sustentation et chaque rotor propulsif dudit système propulsif.

Le giravion hybride comporte une poignée de pilotage selon l'invention, ledit circuit électronique étant configuré pour commander collectivement ledit premier pas.

En présence d'un organe commandable de type face tactile, cette face tactile peut remplir d'autres fonctions sur requêtes et peut par exemple commander le déplacement d'un pointeur d'un écran. Par exemple, un organe additionnel peut permettre d'attribuer diverses fonctions à l'organe commandable.

Eventuellement, la poignée de pilotage peut être mobile autour d'un axe de pilotage pour commander collectivement ledit deuxième pas.

Selon une possibilité, ledit axe de pilotage peut être parallèle à l'axe de rotation du bouton rotatif.

L'invention et ses avantages apparaîtront avec plus de détails dans le cadre de la description qui suit avec des exemples donnés à titre illustratif en référence aux figures annexées qui représentent :
[Fig 1] la figure 1, une vue isométrique d'un giravion hybride,
[Fig 2] la figure 2, un schéma illustrant des commandes de pilotage d'un giravion hybride selon l'invention,
[Fig 3] la figure 3, un schéma montrant une poignée de pilotage selon l'invention vue de dessus muni d'un bouton rotatif,
[Fig 4] la figure 4, un schéma montrant une paroi électronique intégrant un circuit électronique de ladite poignée de pilotage de la figure 3,
[Fig 5] la figure 5, un schéma montrant la poignée de pilotage de la figure 3 vue de côté,
[Fig 6] la figure 6, un schéma présentant une poignée de pilotage munie d'un bouton mobile en translation,
[Fig 7] la figure 7, un schéma présentant une poignée de pilotage munie d'une face tactile,
[Fig 8] la figure 8, un schéma présentant un circuit électrique reliant une dite paroi électronique à au moins un calculateur,

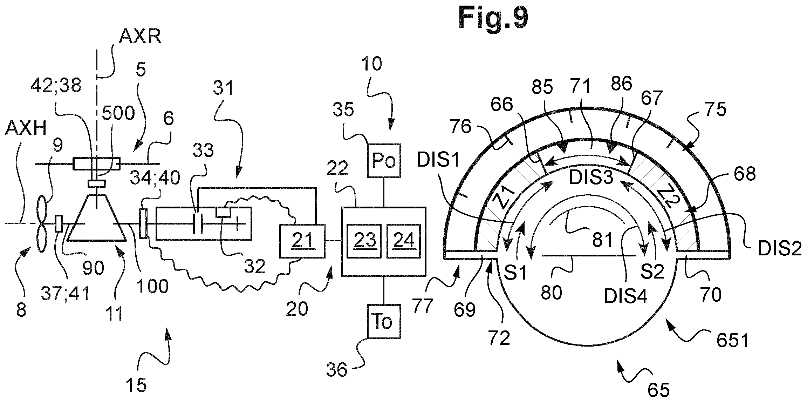

[Fig 9] la figure 9, un schéma montrant un dispositif d'aide au pilotage d'un tel giravion hybride avec un indicateur ayant un chemin de déplacement courbe,
[Fig 10] la figure 10, un schéma montrant un indicateur ayant un chemin de déplacement linéaire,

Les éléments présents dans plusieurs figures distinctes sont affectés d'une seule et même référence.

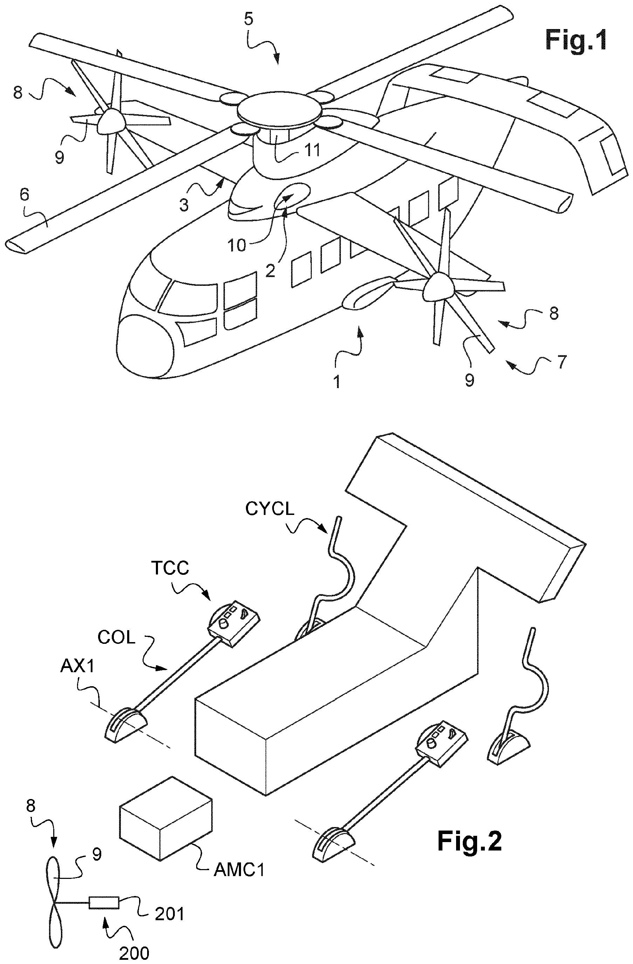

La figure 1 présente un aéronef 1 de type giravion hybride 1 selon l'invention pourvu d'un fuselage portant au moins un rotor de sustentation 5 et un système propulsif 7.

Le système propulsif 7 inclut au moins un rotor propulsif 8, par exemple de type hélice, comprenant une pluralité de premières pales 9 ayant un premier pas variable au moins voire uniquement collectivement par exemple. Selon une possibilité, le giravion hybride 1 inclut un premier rotor propulsif à hélice et un deuxième rotor propulsif à hélice disposés de part et d'autre du fuselage 1, éventuellement à chaque extrémité externe d'une aile 3. Le rotor de sustentation 5 est muni d'une pluralité de deuxièmes pales 6 ayant un deuxième pas variable collectivement et cycliquement par exemple.

Pour mettre en rotation le rotor de sustentation 5 et chaque rotor propulsif 8, l'aéronef 1 inclut une installation motrice 2 munie d'au moins un moteur 10 par exemple de type turbomoteur. De plus, l'installation motrice 2 peut comprendre un système d'interconnexion 11 incluant au moins une boîte de transmission de puissance, au moins un arbre de transmission...

Les vitesses de rotation des arbres de sortie des moteurs 10, des rotors propulsifs 8, du rotor de sustentation 5 et du système mécanique d'interconnexion 11 sont éventuellement proportionnelles entre elles, le rapport de proportionnalité étant variable ou constant quelle que soit la configuration de vol du giravion hybride 1 en conditions normales de fonctionnement de la chaîne cinématique intégrée.

En outre, chaque moteur 10 fonctionne selon une enveloppe de fonctionnement comprenant un ou plusieurs des régimes précités à savoir par exemple : un régime de décollage définissant une puissance maximale au décollage PMD, un régime maximal continu définissant une puissance maximale en continu PMC, un régime transitoire définissant une puissance maximale en transitoire PMT, un premier régime d'urgence définissant une puissance de super urgence PSU, un deuxième régime d'urgence définissant une puissance maximale d'urgence PMU et/ou un troisième régime d'urgence définissant une puissance intermédiaire d'urgence PIU.

Pour contrôler le giravion hybride 1 et en référence à la figure 2, chaque pilote peut disposer d'une commande de poussée TCC permettant de modifier collectivement le premier pas des premières pales de chaque rotor propulsif 8, et par exemple un pas moyen des premières pales 9 des rotors propulsifs 8.

Plus précisément, la commande de poussée TCC agit de manière identique sur les premiers pas des premières pales 9 afin d'obtenir une variation collective du premier pas des premières pales 9. Par exemple, le pilote va requérir une augmentation de 5 degrés du pas moyen de l'ensemble des premières pales 9 des rotors propulsifs 8 pour augmenter la poussée résultante générée notamment par le premier rotor propulsif et le deuxième rotor propulsif, le pas moyen des premières pales 9 des premier et deuxième rotors propulsifs étant éventuellement égal à la demisomme des pas des premières pales 9 des deux rotors propulsifs 8.

La commande de poussée peut transmettre un ordre par exemple à au moins un calculateur de pilotage AMC1, ce calculateur de pilotage AMC1 pilotant une chaine cinématique 200 reliée aux premières pales 9 des rotors propulsifs 8. Par exemple, le calculateur de pilotage AMC1 commande au moins un vérin 201 disposé sur ladite chaîne cinématique 200.

Pour contrôler l'attitude en lacet du giravion hybride 1, le pilote peut disposer d'un dispositif de commande en lacet muni d'un moyen de commande en lacet non illustré, par exemple en pilotant de manière différente les pas des premières pales 9 des deux rotors propulsifs 8. Par exemple, seul le pas collectif des premières pales 9 d'un rotor propulsif 8 est modifié pour agir sur le comportement en lacet du giravion hybride.

Enfin, le giravion hybride 1 est muni de moyens de commande CYCL, COL usuels pour contrôler collectivement et cycliquement le pas des deuxièmes pales 6 du rotor de sustentation 5. Par exemple, la commande de poussée TCC est portée par un levier de pas COL mobile en rotation autour d'un axe de pilotage AX1 pour contrôler collectivement le deuxième pas des deuxièmes pales 6. Une commande cyclique CYCL peut piloter cycliquement le deuxième pas des deuxièmes pales 6 du rotor de sustentation 5.

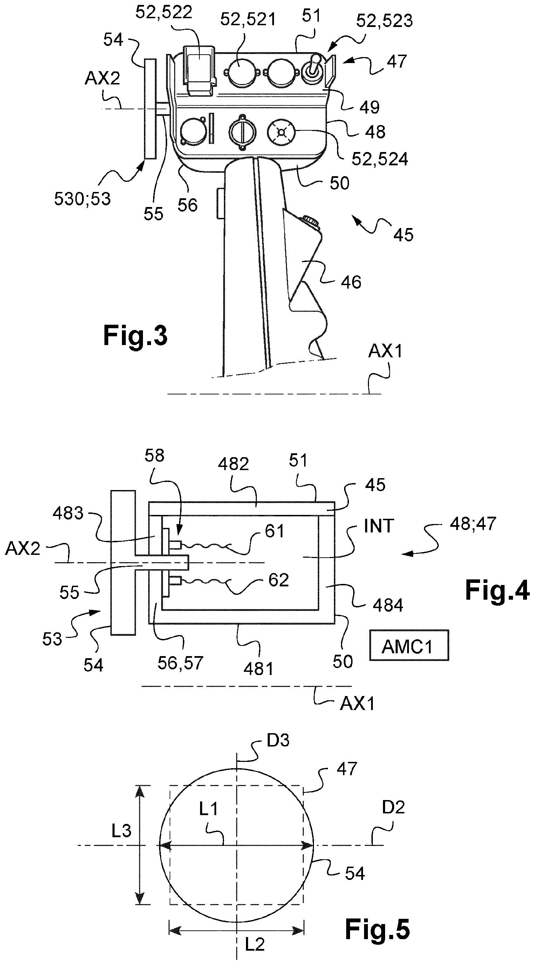

Dans ce contexte, la figure 3 illustre une poignée de pilotage 45 selon l'invention. Par exemple mais non exclusivement, cette poignée de pilotage 45 peut être agencée sur le levier de pas COL illustré précédemment, sur la commande cyclique CYCL, sur un autre type de véhicule...

Quelle que soit son agencement, la poignée de pilotage 45 selon l'invention comporte un manche 46, éventuellement creux. Le manche 46 peut être agencé sur un tube d'un levier par exemple. De plus, la poignée de pilotage 45 est munie d'un boîtier d'extrémité 47 porté par le manche 46.

Ce boîtier d'extrémité 47 comprend une coque 48 creuse. La coque 48 est munie notamment d'une face supérieure 51. De plus, le boîtier d'extrémité 47 comprend au moins une commande 52 manoeuvrable par un pilote tenant la poignée de pilotage 45. Chaque commande 52 est en saillie de la face supérieure 51 vers un milieu extérieur EXT. Autrement dit, chaque commande 52 comporte un organe s'étendant en dehors de la coque pour être manoeuvrable par un pilote. Par ailleurs, chaque commande 52 est mobile par rapport à la coque 48. Selon l'exemple illustré au dessus de la face supérieure 51 s'étend au moins une commande 52 de type bouton poussoir 521 et/ou une commande 52 de type bouton à bascule 522 et/ou une commande 52 de type levier 523 et/ou une commande 52 de type chapeau chinois 524. Chaque commande peut être reliée à des connexions filaires cheminant dans le manche.

Par ailleurs, la poignée de pilotage 45 possède un organe commandable 530 pouvant être sollicité par un individu pour générer un signal, ce signal pouvant modifier le comportement d'au moins un organe tel que le pas d'une pale ou la position d'un pointeur sur un écran par exemple. Dès lors, le boîtier d'extrémité 47 comprend au moins une paroi électronique 56 portant l'organe commandable. Cette paroi électronique 56 intègre un circuit électronique 58, ce circuit électronique 58 comprenant au moins un capteur coopérant avec l'organe commandable pour détecter la manoeuvre de cet organe commandable et générer un signal en fonction de cette sollicitation.

En référence à la figure 4, la coque 48 délimite un volume interne INT creux. Par exemple, le volume interne INT est délimité selon une direction en élévation par une paroi inférieure 481 et une paroi supérieure 482 comprenant la face supérieure, selon une direction transversale et vu de dessus par une paroi gauche 483 et une paroi droite 484, et d'avant en arrière par une paroi avant et une paroi arrière. Par exemple, les diverses parois de la coque 48 sont formées par un ou plusieurs éléments. Selon l'exemple illustré, la paroi inférieure 481 la paroi gauche 483, la paroi droite 484, la paroi avant et la paroi arrière forment conjointement un contenant fermé de manière réversible par la paroi supérieure 482.

Indépendamment de cet aspect, selon un premier mode de réalisation l'organe commandable 530 peut comprendre un bouton mobile par rapport au boîtier d'extrémité 47 et agencé au moins partiellement en dehors de ladite coque 48.

Selon la première variante du premier mode de réalisation illustrée sur la figure 4, l'organe commandable 530 peut comprendre un bouton rotatif 53. Ce bouton rotatif 53 est mobile en rotation par rapport au boîtier d'extrémité 47 autour d'un axe de rotation AX2. Lorsque la poignée de pilotage 45 est mobile autour d'un axe de pilotage AX1, par exemple en étant agencée sur un levier COL commandant collectivement le deuxième pas des deuxièmes pales d'un rotor de sustentation 5, l'axe de rotation AX2 peut être parallèle à l'axe de pilotage AX1.

Le bouton rotatif 53 peut avoir une roue 54 agencée en dehors de la coque 48, à savoir en dehors du volume interne INT. Eventuellement, le bouton rotatif 53 peut aussi comprendre un arbre 55 qui est solidaire de la roue 54 en rotation autour de l'axe de rotation AX2.

Dès lors, cet arbre 55 est porté par la coque 48 et en particulier par un flanc 57 de la coque 48 formant la paroi électronique 56, par exemple un flanc 57 accolé à la face supérieure 51. Ce flanc 57 formant la paroi électronique 56 peut par exemple être la paroi gauche ou la paroi droite précitée. L'arbre 55 est en outre mobile en rotation par rapport au flanc 57 autour de l'axe de rotation AX2. Par exemple, un palier est agencé entre l'arbre 55 et le flanc 57.

Selon un autre exemple non illustré, la roue 54 est en rotation autour de l'axe de rotation AX2 en tournant autour d'un arbre fixe.

En référence à la figure 5, la roue 54 peut présenter un diamètre L1 maximisé par rapport à la coque 48 pour être très accessible à un index d'un pilote. Ce diamètre L1 peut être établi afin toutefois d'éviter un frottement, une gêne ou une commande non désirée vis-à-vis de la main d'un pilote. Par exemple, vue selon une direction allant de la roue 54 vers la coque 48, cette coque 48 peut s'étendre longitudinalement selon une direction longitudinale D2 sur une première longueur L2 et en élévation le long d'une direction en élévation D3 sur une deuxième longueur L3, la première longueur L2 et/ou la deuxième longueur L3 étant inférieure au diamètre L1.

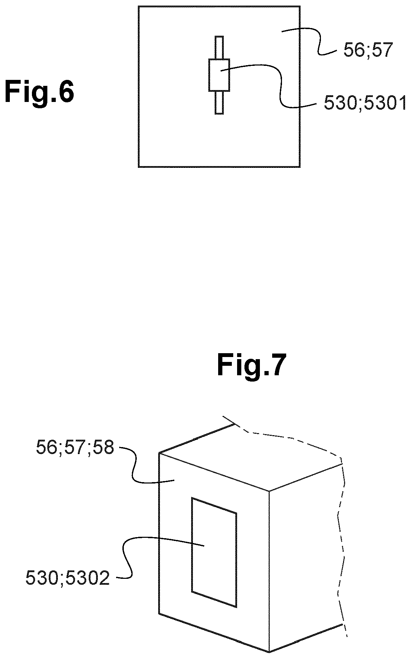

Selon la deuxième variante du premier mode de réalisation illustrée sur la figure 6, l'organe commandable 530 peut comprendre un bouton 5301 mobile en translation.

Selon le deuxième mode de réalisation de la figure 7, l'organe commandable 530 peut comprendre une face tactile 5302 non seulement portée mais aussi intégrée dans la paroi électronique 56.

Selon un autre aspect et en référence à la figure 4, quel que soit le mode de réalisation le boîtier d'extrémité 47 comprend donc une paroi électronique 56 intégrant un circuit électronique 58. Par exemple, le flanc 57 portant un arbre 55 du bouton rotatif 53 éventuel forme cette paroi électronique 56. Une telle paroi électronique 56 peut être obtenue par une méthode de plastronique.

Le circuit électronique 58 est muni d'au moins un capteur coopérant avec le cas échéant le bouton rotatif 53. Le circuit électronique 58 génère au moins un signal qui varie lorsque l'organe commandable est sollicité, et plus précisément selon l'exemple de la figure 4 lorsque la roue 54 est mise en rotation autour de l'axe de rotation AX2. Un tel signal peut être un signal analogique ou numérique par exemple.

Le circuit électronique 58 peut de plus comprendre au moins une piste électriquement conductrice par exemple. En outre, le circuit électronique 58 peut être relié à au moins une connexion électrique 61, 62. Cette connexion électrique 61, 62 peut être une connexion filaire cheminant dans ou contre le manche 46 et/ ou dans ou contre le boîtier et/ou intégré par plastronique à au moins un organe du manche et/ou du boîtier.

Eventuellement et par exemple en présence d'une roue, le circuit électronique 58 comporte au moins une paire de deux senseurs 59, 60 dissimilaires générant chacun un signal variant en fonction de la sollicitation de l'organe commandable, et le cas échéant par exemple en fonction d'une rotation de la roue 54 ou d'une translation du bouton 5301 ou d'une pression exercée sur la face tactile 5302. Les deux senseurs 59, 60 d'une même paire peuvent communiquer avec un même calculateur de pilotage AMC1. Par exemple et notamment en présence de la roue 54 ou du bouton 5301, les deux senseurs d'une paire comportent respectivement un capteur à effet hall 59 et un potentiomètre 60.

En référence à la figure 6, le circuit électronique 58 peut comporter au moins deux dites paires 301, 302 de deux senseurs 59, 60, les deux senseurs 59, 60 d'une paire 301 communiquant avec un premier calculateur de pilotage AMC1 et les deux senseurs 59, 60 de l'autre paire 302 communiquant avec un deuxième calculateur de pilotage AMC2.

Indépendamment de la nature d'une poignée de commande servant par exemple à la commande de poussée d'un giravion, afin d'éviter d'être confronté à des manoeuvres susceptibles de mettre en péril ce giravion hybride 1, ce giravion hybride 1 peut être muni d'un dispositif d'aide au pilotage 15.

La figure 7 présente un tel dispositif d'aide au pilotage 15. Ce dispositif d'aide au pilotage 15 comprend un calculateur embarqué 20. De plus, le dispositif d'aide au pilotage 15 comporte un indicateur 65 piloté par le calculateur embarqué 20 ainsi qu'éventuellement une pluralité de capteurs reliés au calculateur embarqué 20.

Le calculateur embarqué 20 peut comprendre un ou plusieurs calculateurs communiquant ensembles. Selon l'exemple représenté, le calculateur embarqué 20 comporte au moins un calculateur central 22 et un calculateur moteur 21 usuel par moteur, voire un ou plusieurs des calculateurs de pilotage précités. Le calculateur central 22 peut être fusionné avec un des calculateurs de pilotage précités.

Un tel calculateur moteur 21 est par exemple du type d'un calculateur d'un système connu sous l'acronyme FADEC. Chaque calculateur moteur 21 est alors relié à au moins un capteur moteur. Un tel calculateur moteur 21 peut réguler un moteur thermique en contrôlant son doseur de carburant par exemple ou un moteur électrique. Un tel calculateur moteur 21 peut en outre délivrer, pour chaque régime de fonctionnement, la marge de puissance disponible pour ce moteur par rapport à la puissance maximale à ce régime et peut délivrer une valeur d'une puissance courante délivrée par ce moteur.

Selon un autre exemple, un unique calculateur est par exemple employé.

Chaque calculateur peut comprendre par exemple au moins un processeur 23, au moins une mémoire 24, au moins un circuit intégré, au moins un système programmable, au moins un circuit logique, ces exemples ne limitant pas la portée donnée à l'expression « calculateur ».

Dès lors, le calculateur embarqué 20 est relié par des connections filaires ou non filaires à des capteurs 31 de mesure de paramètres de surveillance de chaque moteur 10. Par exemple, chaque calculateur moteur 21 est relié à un jeu de capteurs moteur. Les paramètres de surveillance d'un moteur 10 peuvent inclure au moins un paramètre à choisir dans une liste incluant la vitesse de rotation Ng d'un générateur de gaz de chaque moteur 10, le couple TQ de chaque moteur 10 et une température des gaz par exemple la température des gaz T45 à l'entrée d'une turbine libre basse pression de chaque moteur 10. Dès lors, pour chaque moteur 10 le dispositif d'aide au pilotage 15 peut posséder un capteur 32 de mesure de la vitesse de rotation Ng du moteur, un couplemètre 34 de mesure du couple TQ développé par le moteur 10 sur un arbre de sortie moteur 100 entraîné par ce moteur 10, et un capteur 33 de mesure de la température des gaz T45 du moteur 10. Un capteur de vitesse de rotation moteur 40 peut mesurer la vitesse de rotation de l'arbre de sortie moteur.

Par ailleurs, le dispositif d'aide au pilotage 15 peut comprendre un senseur 35 de la pression extérieure P0 et un senseur 36 de la température extérieure T0 qui sont reliés au calculateur embarqué 20, et par exemple au calculateur central 22.

Par ailleurs, le calculateur embarqué 20, et par exemple le calculateur central 22, peut être relié à un couplemètre de rotor propulsif 37 par rotor propulsif 8. Chaque couplemètre de rotor propulsif 37 peut mesurer un couple sur un arbre de rotor propulsif 90 entrainant en rotation le rotor propulsif 8 autour de son axe de rotation AXH. Un capteur de vitesse de rotation de rotor propulsif 41 peut mesurer la vitesse de rotation de l'arbre de rotor propulsif 90.

Le calculateur embarqué 20, et par exemple le calculateur central 22, peut être relié à un couplemètre rotor 38. Le couplemètre rotor 38 peut mesurer un couple sur un arbre rotor 500 entrainant en rotation le rotor de sustentation 5 autour de son axe de rotation AXR. Un capteur de vitesse de rotation rotor 42 peut mesurer la vitesse de rotation de l'arbre rotor 500.

Le calculateur embarqué 20, et par exemple le calculateur central 22, peut être relié à un capteur de pas moyen mesurant le pas moyen actuel des premières pales du rotor propulsif 8 et/ou à un capteur de vitesse air apte à mesurer la vitesse air vraie du giravion hybride et/ou un capteur de vitesse de rotation mesurant la vitesse de rotation des rotors propulsifs 8 et/ou un capteur de vitesse de rotation mesurant la vitesse de rotation du rotor de sustentation 5 et/ou un capteur de pas mesurant le pas collectif des deuxièmes pales du rotor de sustentation 5.

Par ailleurs, le calculateur embarqué 20 est relié à un indicateur 65 par des liaisons usuelles non représentées. Un tel indicateur comporte un écran 651 et éventuellement un calculateur voire même un des calculateurs précités.

L'indicateur 65 présente un chemin de déplacement 68 qui s'étend d'une première extrémité 69 jusqu'à une deuxième extrémité 70.

Selon un procédé, le calculateur embarqué 20 transmet un signal à l'indicateur 65. En fonction de ce signal, l'indicateur 65 positionne un premier pointeur 66 sur le chemin de déplacement 68. La position du premier pointeur 66 est calculée par le calculateur embarqué 20 ou l'indicateur 65 et varie en fonction d'une première puissance P1 de l'installation motrice 2 consommée par le système propulsif 7.

De plus, l'indicateur 65 positionne un deuxième pointeur 67 sur le chemin de déplacement 68. La position du deuxième pointeur 67 est calculée par le calculateur embarqué 20 ou l'indicateur 65 et varie en fonction d'une deuxième puissance P2 de l'installation motrice 2 consommée par le rotor de sustentation 5.

En particulier, le premier pointeur 66 se rapproche selon un premier sens S1 de déplacement de la deuxième extrémité 70 lorsque la première puissance P1 augmente. A l'inverse, le deuxième pointeur 67 se rapproche de la première extrémité 69 selon un deuxième sens S2 de déplacement lorsque la deuxième puissance P2 augmente, le deuxième sens S2 étant opposé au premier sens S1.

En outre, un espace 71 variable sépare le premier pointeur 66 et le deuxième pointeur 67 tant que l'installation motrice 2 présente une marge de puissance par rapport à la puissance maximale associée au régime courant.

Par suite, une première distance DIS1 séparant la première extrémité 69 du premier pointeur 66 est établie pour être l'image de la première puissance P1, une deuxième distance DIS2 séparant la deuxième extrémité 70 du deuxième pointeur 67 étant l'image de la deuxième puissance P2. De plus, l'espace 74 séparant le premier pointeur 66 et le deuxième pointeur 67 s'étend sur une troisième DIS3 représentant une marge de puissance non utilisée de l'installation motrice 2 au régime courant tant que le premier pointeur 66 est agencé entre la première extrémité 69 et le deuxième pointeur 67. La quatrième distance DIS4 correspondant à la somme de la première distance DIS1, de la deuxième distance DIS 2 et de la troisième distance DIS 3 est l'image de la puissance maximale disponible au régime courant.

Eventuellement, l'indicateur 65 confère à une première zone Z1 située entre la première extrémité 69 et le premier pointeur 66 un premier fond visuellement identifiable pour faciliter la lecture des informations. L'indicateur 65 peut conférer à une deuxième zone Z2 située entre la deuxième extrémité 70 et le deuxième pointeur 67 un deuxième fond visuellement identifiable et éventuellement différent du premier fond. Par exemple, la première zone Z1 et la deuxième zone Z2 comportent des hachures et/ou des couleurs différentes.

Selon un exemple de calcul de la position des pointeurs 66, 67, le calculateur embarqué 20 détermine les valeurs de la première puissance P1 et de la deuxième puissance P2 et transmet ces valeurs ainsi que la puissance maximale à l'indicateur 65. L'indicateur 65 détermine alors une position cible dans l'indicateur 65 du premier pointeur 66 en fonction de la première puissance P1 et une position cible du deuxième pointeur 67 en fonction de ladite deuxième puissance P2 selon d'au moins une loi mémorisée. La puissance maximale peut être prise en compte. Selon un exemple, la première distance DIS1 est calculée en fonction du produit d'une constante et d'un quotient de la première puissance P1 et de la puissance maximale, la deuxième distance DIS2 étant calculée en fonction du produit de la dite constante et d'un quotient de la deuxième puissance P2 et de la puissance maximale.

Eventuellement, le calculateur embarqué 20 peut calculer la première puissance P1 à l'aide de la somme de la puissance consommée par chaque rotor propulsif. Cette puissance consommée par chaque rotor propulsif peut être obtenue en multipliant le couple de rotor propulsif 8 exercé sur l'arbre de rotor propulsif 90 et la vitesse de rotation de l'arbre de rotor propulsif 90 qui sont mesurés respectivement avec le couplemètre de rotor propulsif 37 et le capteur de vitesse de rotation de rotor propulsif 41. Alternativement, le calculateur embarqué 20 calcule la puissance consommée par chaque rotor propulsif 8 à l'aide de polaires mémorisées et de paramètres du rotor propulsif 8 tels que le rayon des deuxièmes pales, la vitesse en bout des premières pales du rotor propulsif, la vitesse air de l'aéronef, le pas des deuxièmes pales...

Eventuellement, le calculateur embarqué 20 peut calculer la deuxième puissance P2 consommée par le rotor de sustentation en multipliant le couple exercé sur l'arbre rotor 500 et la vitesse de rotation de l'arbre rotor 500 qui sont mesurés respectivement avec le couplemètre rotor 38 et le capteur de vitesse de rotation rotor 42.

Selon un autre exemple de calcul, le calculateur embarqué 20 détermine les valeurs d'un premier pas collectif courant des premières pales 9 et d'un deuxième pas collectif courant des deuxièmes pales 6. L'indicateur 65 détermine alors une position cible dans l'indicateur 65 du premier pointeur 66 en fonction du premier pas collectif courant et une position cible du deuxième pointeur 67 en fonction du deuxième pas collectif courant.

Quel que soit le calcul, chaque pointeur peut illustrer un pas collectif exprimé en puissance.

Selon un autre aspect, le premier pointeur 66 peut aussi pointer une échelle de vitesse air 75 du giravion hybride 1. Par exemple, le premier pointeur se déplace en parallèle de graduations 76 relatives chacune à une vitesse air.

Selon un autre aspect, le calculateur embarqué peut calculer au moins une première limite de pas 85 des premières pales 9, éventuellement via une conversion en équivalent de puissance, et transmettre un signal à l'indicateur porteur de cette première limite de pas. L'indicateur calcule l'emplacement d'un symbole représentant la première limite de pas 85 le long du chemin de déplacement et affiche ce symbole illustrant la première limite de pas 85 le long du chemin de déplacement 68.

Selon un autre aspect, le calculateur embarqué 20 peut calculer au moins une deuxième limite de pas 86 des deuxièmes pales 6, éventuellement via une conversion en équivalent de puissance, et transmettre un signal à l'indicateur porteur de cette deuxième limite de pas 86. L'indicateur calcule l'emplacement d'un symbole représentant la deuxième limite de pas 86 le long du chemin de déplacement et affiche ce symbole illustrant la deuxième limite de pas 86 le long du chemin de déplacement 68.

Selon un autre aspect et en référence à la réalisation de la figure 7, le chemin de déplacement 68 peut avoir la forme d'un premier arc de cercle 72. Le cas échéant, l'échelle de vitesse air 75 est positionnée sur un deuxième arc de cercle 77 accolé au premier arc de cercle 72, par exemple au dessus du premier arc de cercle 72.

Eventuellement, le premier arc de cercle 72 peut être situé au dessus d'un horizon artificiel 80 et/ou d'un cap 81.

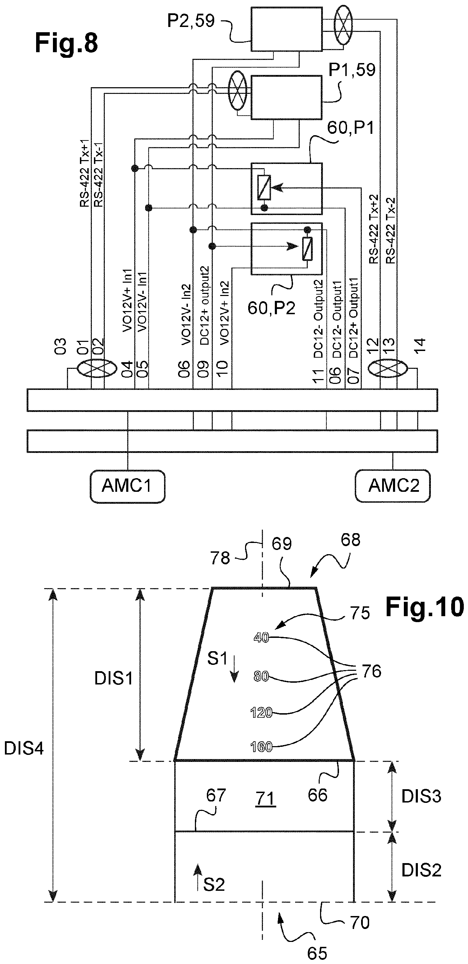

Selon la réalisation de la figure 8, le premier pointeur 66 et le deuxième pointeur 67 peuvent être mobiles linéairement, par exemple le long d'une direction 78 superposée à une échelle de vitesse air 75 du giravion hybride 1, ladite une échelle de vitesse air 75 étant munie de graduations 76.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit sans sortir du cadre de la présente invention telle que revendiquée.

## Revendications

1. Poignée de pilotage (45) manoeuvrable par un pilote, ladite poignée de pilotage (45) comportant un manche (46) portant un boîtier d'extrémité (47), ledit boîtier d'extrémité (47) comprenant une coque (48) creuse munie d'une face supérieure (51), ledit boîtier d'extrémité (47) comportant au moins une commande (52) en saillie vers un milieu extérieur (EXT) de ladite face supérieure (51), ladite au moins une commande (52) étant mobile par rapport à la coque (48), ladite poignée de pilotage (45) comportant un organe commandable (530) pouvant être sollicité par un individu pour générer un ordre de commande, **caractérisée en ce que** ladite coque (48) dudit boîtier d'extrémité (47) comprend au moins une paroi électronique (56) intégrant un circuit électronique (58), ledit circuit électronique (58) étant intégré dans une épaisseur de la paroi électronique (58) par une méthode de plastronique, ledit organe commandable étant porté par la paroi électronique, ledit circuit électronique (58) comprenant au moins un capteur (59,60) coopérant avec ledit organe commandable (530).

2. Poignée de pilotage selon la revendication 1,
**caractérisée en ce que** ledit organe commandable (530) comprend un bouton (53, 5301) mobile par rapport au boîtier d'extrémité (47) et agencé au moins partiellement en dehors de ladite coque (48), ledit au moins un capteur (59,60) coopérant avec ledit bouton (53, 5301).

3. Poignée de pilotage selon la revendication 2,
**caractérisée en ce que** ledit organe commandable (530) comprend un dit bouton de type bouton rotatif (53) mobile en rotation par rapport au boîtier d'extrémité (47) autour d'un axe de rotation (AX2), ledit bouton rotatif (53) ayant une roue (54) agencée en dehors de ladite coque (48), ledit au moins un capteur (59,60) coopérant avec ledit bouton rotatif (53).

4. Poignée de pilotage selon la revendication 3,
**caractérisée en ce que** ledit bouton rotatif (53) comprend un arbre (55) solidaire de la roue (54) en rotation autour de l'axe de rotation (AX2), ledit arbre (55) étant porté par la paroi électronique (56) de ladite coque (48), ledit arbre (55) étant mobile en rotation par rapport à un flanc (57) de la coque (48).

5. Poignée de pilotage selon la revendication 1,
**caractérisée en ce que** ledit organe commandable (53) comporte une face tactile (5302).

6. Poignée de pilotage selon l'une quelconque des revendications 1 à 5,
**caractérisée en ce que** ladite paroi électronique (56) est accolée à la face supérieure (51).

7. Poignée de pilotage selon l'une quelconque des revendications 1 à 6,
**caractérisée en ce que** ledit circuit électronique (58) est relié à au moins une connexion électrique (61, 62) cheminant dans ledit manche (46).

8. Poignée de pilotage selon l'une quelconque des revendications 1 à 7,
**caractérisée en ce que** ledit au moins un capteur comporte au moins une paire de deux senseurs (59, 60) dissimilaires, lesdits deux senseurs (59, 60) d'une paire étant configurés pour communiquer avec un même calculateur (AMC1, AMC2).

9. Poignée de pilotage selon la revendication 8,
**caractérisée en ce que** lesdits deux senseurs d'une dite paire comportent un capteur à effet hall (59) et un potentiomètre (60).

10. Poignée de pilotage selon l'une quelconque des revendications 8 à 9,
**caractérisée en ce que** ledit au moins un capteur comporte au moins deux dites paires configurées pour communiquer respectivement avec deux calculateurs (AMC1, AMC2).

11. Poignée de pilotage selon la revendication 3,
**caractérisée en ce que** ladite roue (54) présente un diamètre (L1) supérieur à une longueur (L2, L3) de la coque, ladite roue (54) étant en saillie de la coque selon au moins une direction (D2, D3) vue selon un sens allant de la roue (54) vers la coque.

12. Giravion hybride (1), le giravion hybride (1) ayant un système propulsif (7) comprenant au moins un rotor propulsif (8) muni d'une pluralité de premières pales (9) ayant un premier pas variable au moins pour participer à l'avancement du giravion hybride (1), ledit giravion hybride (1) comprenant un rotor de sustentation (5) muni d'une pluralité de deuxièmes pales (6) ayant un deuxième pas variable au moins pour participer à la sustentation du giravion hybride (1), ledit giravion hybride (1) ayant une installation motrice (2) pourvue d'au moins un moteur (10) fonctionnant selon au moins un régime pour mettre en rotation ledit rotor de sustentation (5) et chaque rotor propulsif (8) dudit système propulsif,
**caractérisé en ce que** ledit giravion hybride (1) comporte une poignée de pilotage (45) selon l'une quelconque des revendications 1 à 11, ledit circuit électronique (58) étant configuré pour commander collectivement ledit premier pas.

13. Giravion hybride selon la revendication 12,
**caractérisé en ce que** ladite poignée de pilotage (45) est mobile autour d'un axe de pilotage (AX1) pour commander collectivement ledit deuxième pas.

14. Giravion hybride selon la revendication 13,
**caractérisé en ce que** ledit axe de pilotage (AX1) est parallèle à l'axe de rotation (AX2).

## Patentansprüche

1. Von einem Piloten bedienbarer Steuerhebel (45), wobei der Steuerhebel (45) einen Schaft (46) umfasst, der ein Endgehäuse (47) trägt, wobei das Endgehäuse (47) eine hohle Schale (48) mit einer Oberseite (51) umfasst, wobei das Endgehäuse (47) mindestens eine Steuerung (52) umfasst, die von der Oberseite (51) in eine Umgebung (EXT) vorsteht, und die mindestens eine Steuerung (52) in Bezug auf die Schale (48) beweglich ist, wobei der Steuerhebel (45) ein steuerbares Organ (530) umfasst, das durch eine Person betätigbar ist, um einen Befehl zu erzeugen, **dadurch gekennzeichnet, dass**
die Schale (48) des Endgehäuses (47) mindestens eine elektronische Wandung (56) umfasst, die eine elektronische Schaltung (58) integriert, wobei die elektronische Schaltung (58) durch ein Plastronikverfahren in eine Dicke der elektronischen Wandung (58) integriert ist, wobei das steuerbare Organ von der elektronischen Wandung getragen ist, wobei die elektronische Schaltung (58) mindestens einen Sensor (59, 60) umfasst, der mit dem steuerbaren Organ (530) zusammenwirkt.

2. Steuerhebel nach Anspruch 1,
**dadurch gekennzeichnet, dass** das steuerbare Organ (530) einen Knopf (53, 5301) umfasst, der in Bezug auf das Endgehäuse (47) beweglich ist und zumindest teilweise außerhalb der Schale (48) angeordnet ist, wobei der mindestens eine Sensor (59, 60) mit dem Knopf (53, 5301) zusammenwirkt.

3. Steuerhebel nach Anspruch 2,
**dadurch gekennzeichnet, dass** das steuerbare Organ (530) einen als Drehknopf (53) bezeichneten Knopf umfasst, der in Bezug auf das Endgehäuse (47) um eine Drehachse (AX2) drehbar ist, wobei der Drehknopf (53) ein Rad (54) aufweist, das außerhalb der Schale (48) angeordnet ist, und der mindestens eine Sensor (59, 60) mit dem Drehknopf (53) zusammenwirkt.

4. Steuerhebel nach Anspruch 3,
**dadurch gekennzeichnet, dass** der Drehknopf (53) eine Welle (55) umfasst, die um die Drehachse (AX2) drehfest mit dem Rad (54) verbunden ist, dass die Welle (55) von der elektronischen Wand (56) der Schale (48) getragen ist, und dass die Welle (55) in Bezug auf eine Flanke (57) der Schale (48) drehbeweglich ist.

5. Steuerhebel nach Anspruch 1,
**dadurch gekennzeichnet, dass** das steuerbare Organ (53) eine taktile Fläche (5302) aufweist.

6. Steuerhebel nach einem der Ansprüche 1 bis 5,
**dadurch gekennzeichnet, dass** die elektronische Wandung (56) an die Oberseite (51) angefügt ist.

7. Steuerhebel nach einem der Ansprüche 1 bis 6,
**dadurch gekennzeichnet, dass** die elektronische Schaltung (58) mit mindestens einer elektrischen Verbindung (61, 62) verbunden ist, die in dem Schaft (46) verläuft.

8. Steuerhebel nach einem der Ansprüche 1 bis 7,
**dadurch gekennzeichnet, dass** der mindestens eine Sensor mindestens ein Paar von zwei ungleichen Sensoren (59, 60) umfasst, wobei die beiden Sensoren (59, 60) eines Paars konfiguriert sind, um mit einem gleichen Rechner (AMC1, AMC2) zu kommunizieren.

9. Steuerhebel nach Anspruch 8,
**dadurch gekennzeichnet, dass** die beiden Sensoren des Paars einen Hall-Sensor (59) und ein Potentiometer (60) umfassen.

10. Steuerhebel nach einem der Ansprüche 8 bis 9,
**dadurch gekennzeichnet, dass** der mindestens eine Sensor mindestens zwei der besagten Paare umfasst, die konfiguriert sind, um jeweils mit zwei Rechnern (AMC1, AMC2) zu kommunizieren.

11. Steuerhebel nach Anspruch 3,
**dadurch gekennzeichnet, dass** das Rad (54) einen Durchmesser (L1) aufweist, der größer ist als eine Länge (L2, L3) der Schale, wobei das Rad (54), gesehen in einer Richtung von dem Rad (54) zu der Schale, in mindestens einer Richtung (D2, D3) von der Schale vorsteht.

12. Hybrid-Drehflügelflugzeug (1), wobei das Hybrid-Drehflügelflugzeug (1) ein Antriebssystem (7) aufweist, das mindestens einen Antriebsrotor (8) umfasst, der mit einer Mehrzahl von ersten Blättern (9) versehen ist, die einen variablen ersten Anstellwinkel aufweisen, um zumindest an der Vorwärtsbewegung des Hybrid-Drehflügelflugzeugs (1) mitzuwirken, wobei das Hybrid-Drehflügelflugzeug (1) einen Auftriebsrotor (5) umfasst, der mit einer Mehrzahl von zweiten Blättern (6) versehen ist, die zumindest einen zweiten variablen Anstellwinkel aufweisen, um am Auftrieb des Hybrid-Drehflügelflugzeugs (1) mitzuwirken, wobei das Hybrid-Drehflügelflugzeug (1) ein Triebwerk (2) mit mindestens einem Motor (10) hat, der in mindestens einer Betriebsart betrieben wird, um den Auftriebsrotor (5) und jeden Antriebsrotor (8) des Antriebssystems in Drehung zu versetzen,
**dadurch gekennzeichnet, dass** das Hybrid-Drehflügelflugzeug (1) einen Steuerhebel (45) nach einem der Ansprüche 1 bis 11 aufweist, wobei die elektronische Schaltung (58) konfiguriert ist, um den ersten Anstellwinkel kollektiv zu steuern.

13. Hybrid-Drehflügelflugzeug nach Anspruch 12,
**dadurch gekennzeichnet, dass** der Steuerhebel (45) zum kollektiven Steuern des zweiten Anstellwinkels um eine Steuerachse (AX1) beweglich ist.

14. Hybrid-Drehflügelflugzeug nach Anspruch 13,
**dadurch gekennzeichnet, dass** die Steuerachse (AX1) parallel zur Drehachse (AX2) ist.

## Claims

1. Flight control handle (45) which can be manoeuvred by a pilot, said flight control handle (45) comprising a grip (46) carrying an end box (47), said end box (47) comprising a hollow shell (48) equipped with a top face (51), said end box (47) comprising at least one control (52) projecting towards an external environment (EXT) of said top face (51), said at least one control (52) being mobile relative to the shell (48), said flight control handle (45) comprising a controllable member (530) capable of being actuated by an individual in order to generate a control order, **characterised in that** said shell (48) of said end box (47) comprises at least one electronic wall (56) incorporating an electronic circuit (58), said electronic circuit (58) being incorporated in a thickness of the electronic wall (58) by a plastronic method, said controllable member being carried by the electronic wall, said electronic circuit (58) comprising at least one sensor (59, 60) co-operating with said controllable member (530).

2. Flight control handle according to claim 1,
**characterised in that** said controllable member (530) comprises a knob (53, 5301) mobile relative to said end box (47) and arranged at least partially outside said shell (48), said at least one sensor (59, 60) co-operating with said knob (53, 5301).

3. Flight control handle according to claim 2,
**characterised in that** said controllable member (530) comprises one said knob being a rotary knob (53) which is mobile relative to the end box (47) about an axis of rotation (AX2), said rotary knob (53) having a wheel (54) arranged outside said shell (48), said at least one sensor (59, 60) co-operating with said rotary knob (53).

4. Flight control handle according to claim 3,
**characterised in that** said rotary knob (53) comprises a shaft (55) secured to said wheel (54) in rotation about the axis of rotation (AX2), said shaft (55) being carried by the electronic wall (56) of said shell (48), said shaft (55) being mobile in rotation relative to a side (57) of the shell (48).

5. Flight control handle according to claim 1,
**characterised in that** said controllable member (53) comprises a touch-sensitive face (5302).

6. Flight control handle according to any one of claims 1 to 5,
**characterised in that** said electronic wall (56) is coupled to the top face (51).

7. Flight control handle according to any one of claims 1 to 6,
**characterised in that** said electronic circuit (58) is connected to at least one electrical connection (61, 62) running through said grip (46).

8. Flight control handle according to any one of claims 1 to 7,
**characterised in that** said at least one sensor comprises at least one pair of dissimilar sensors (59, 60), said two sensors (59, 60) of a pair being configured to communicate with a same computer (AMC1, AMC2).

9. Flight control handle according to claim 8,
**characterised in that** said two sensors of a said pair comprise a Hall effect sensor (59) and a potentiometer (60).

10. Flight control handle according to any one of claims 8 to 9,
**characterised in that** said at least one sensor comprises at least two said pairs configured to communicate respectively with two computers (AMC1, AMC2).

11. Flight control handle according to claim 3,
**characterised in that** said wheel (54) has a diameter (L1) greater than a length (L2, L3) of the shell, said wheel (54) projecting from the shell along at least one direction (D2, D3) as seen looking from the wheel (54) towards the shell.

12. Hybrid rotorcraft (1), the hybrid rotorcraft (1) having a propulsive system (7) comprising at least one propulsive rotor (8) equipped with a plurality of first blades (9) having a first variable pitch at least for participating in providing forward propulsion of the hybrid rotorcraft (1), said hybrid rotorcraft (1) comprising a lift rotor (5) equipped with a plurality of second blades (6) having a second variable pitch at least for participating in providing lift for the hybrid rotorcraft (1), said hybrid rotorcraft (1) having a motor unit (2) provided with at least one engine (10) operating at at least one rating for driving said lift rotor (5) in rotation and driving each propulsive rotor (8) of said propulsive system in rotation,
**characterised in that** said hybrid rotorcraft (1) comprises a flight control handle (45) according to any one of claims 1 to 11, said electronic circuit (58) being configured to control said first pitch collectively.

13. Hybrid rotorcraft according to claim 12,
**characterised in that** said flight control handle (45) is mobile around a flight control axis (AX1) for controlling said second pitch collectively.

14. Hybrid rotorcraft according to claim 13,
**characterised in that** said flight control axis (AX1) is parallel to the axis of rotation (AX2).
